Europäisches Patentamt

European Patent Office

Office européen des brevets

(11) Veröffentlichungsnummer: **0 036 635**
**B1**

(12) **EUROPÄISCHE PATENTSCHRIFT**

(45) Veröffentlichungstag der Patentschrift:
**12.12.84**

(21) Anmeldenummer: **81102049.4**

(22) Anmeldetag: **19.03.81**

(51) Int. Cl.³: **B 32 B 31/20,** B 30 B 5/06,
B 65 H 39/16

(54) **Vorrichtung zum Zusammenfügen mehrerer Werkstoffschichten.**

(30) Priorität: **22.03.80 DE 3011217**

(43) Veröffentlichungstag der Anmeldung:
**30.09.81 Patentblatt 81/39**

(45) Bekanntmachung des Hinweises auf die Patenterteilung:
**12.12.84 Patentblatt 84/50**

(84) Benannte Vertragsstaaten:
**AT BE CH FR GB IT LI NL SE**

(56) Entgegenhaltungen:
**DE - A - 2 343 427**

(73) Patentinhaber: **Theodor Hymmen KG,
Theodor-Hymmen-Strasse 3, D-4800 Bielefeld 1 (DE)**

(72) Erfinder: **Dedekind, Gerd, Markusstrasse 20a,
D-4800 Bielefeld 1 (DE)**

(74) Vertreter: **Hoefer, Theodor, Dipl.-Ing., Kreuzstrasse 32,
D-4800 Bielefeld 1 (DE)**

## Beschreibung

Die Erfindung betrifft eine Vorrichtung zum Zusammenfügen mehrerer bandförmiger Werkstoffschichten im Durchlauf durch eine Doppelbandpresse mit umlaufenden beheizbaren Stahlbändern, in welcher die Werkstoffschichten unter Wärmeeinwirkung aneinander preßbar sind, mit einem an der Einlaufseite der Doppelbandpresse zwischen jedem Stahlband und der benachbarten Werkstoffschicht die Strahlungswärme des Stahlbandes auf der gesamten Breite abdämmende Schutzschicht.

Mit Doppelbandpressen werden aus zwei, drei oder mehr Werkstoffschichten kontinuierlich im Durchlauf Verbundfolien verpreßt. In der Regel bestehen solche Verbundfolien aus einer Kernlage, zum Beispiel aus Vulkanfiber, und einer oder zwei Decklagen aus mit einem Aminoplastharz getränkten Papieren. Es ist bekannt, derartige Anlagen in schmalen Arbeitsbreiten bis 650 mm zu betreiben. Dabei werden die Werkstoffschichten von den umlaufenden Stahlbändern der Doppelbandpresse nicht nur zusammengepreßt, sondern auch erhitzt. Die Stahlbänder haben eine Temperatur von etwa 160° C.

Während der Erwärmung der einzelnen Lagen und bei deren Verpressen zwischen den Stahlbändern tritt infolge der Wärmeeinwirkung ein Schrumpfungspreß bei den Einzellagen bzw. bei der zusammengesetzten Verbundfolie auf, der mit einer Feuchtigkeitsabnahme verbunden ist. Mit der Schrumpfung ist eine Breitenabnahme der Werkstoffschicht verbunden, deren absoluter Wert um so größer ist, je größer die Arbeitsbreite der Maschine ist. Bei Breiten oberhalb von 650 mm wirkt sich die Schrumpfung so ungünstig aus, daß Verbundfolien guter Qualität nicht mehr hergestellt werden können. Die äußeren Lagen der herzustellenden Verbundfolie werden schon vor der Aufbringung des Preßdruckes an der Einlaufseite der Doppelbandpresse durch Wärmestrahlung von den Stahlbändern erhitzt. Sie geben dabei einen Teil ihres Feuchtigkeitsgehaltes ab und fangen vorzeitig an zu schrumpfen. Die Kernlage gerät erst später unter Hitzeeinwirkung, weil sie durch die obere Decklage und die untere Decklage vor den Wärme ausstrahlenden Stahlbändern geschützt ist. Sie beginnt daher auch erst später zu schrumpfen. Das unterschiedliche Schrumpfen der Lagen der herzustellenden Verbundfolie führt im Betrieb zu einer unerwünschten Wellenbildung der Verbundfolie.

Der Erfindung liegt die Aufgabe zugrunde, sowohl ein vorzeitiges Aufheizen der in die Doppelbandpresse einlaufenden äußeren Werkstoffschichten zu vermeiden, um alle Werkstoffschichten im selben Zeitpunkt der Behandlungswärme auszusetzen und auf diese Weise durch ein gleichmäßiges Schrumpfen eine Wellenbildung an der Verbundfolie zu verhindern, als auch zu vermeiden, daß der Wärmeschutzschild nach längerem Betrieb von dem Stahlband aufgeheizt wird und dann ebenfalls Wärmestrahlung an die benachbarte Werkstoffschicht abgibt.

Diese Aufgabe wird erfindungsgemäß dadurch gelöst, daß jeder Schutzschild als eine von einem Kühlmittel durchströmte Kühltasche ausgebildet ist.

Ein Ausführungsbeispiel der Erfindung ist in der Zeichnung dargestellt und wird im folgenden näher beschrieben. Es zeigt

Fig. 1 eine schematische Seitenansicht einer Doppelbandpresse mit einer vorgeschalteten Abwickelstation mehrerer Werkstoffschichten;

Fig. 2 eine vergrößerte Darstellung des Einlaufbereiches der Doppelbandpresse;

Fig. 3 eine Kühltasche mit einer Rohrschlange als Kühlmittelleitung;

Fig. 4 eine Kühltasche mit Umlenkblechen für das Kühlmittel.

Die erfindungsgemäße Vorrichtung besteht aus einer Doppelbandpresse 10 und einer Abwickelstation 11 mit drei Vorratsrollen 12 für eine obere Decklage 13, eine Kernlage 14 und eine untere Decklage 15 als Werkstoffschichten, die in der Doppelbandpresse 10 zu einer gemeinsamen Verbundfolie 16 zusammengefügt werden.

Die Doppelbandpresse 10 enthält vier Umlenkrollen 17, wobei jeweils über zwei untere Umlenkrollen 17 und zwei obere Umlenkrollen 17 ein Stahlband 18 gespannt ist. Die Umlenkrollen 17 fördern die Stahlbänder 18, zwischen denen die Werkstoffschichten 13 bis 15 innerhalb der Doppelbandpresse 10 mit Hilfe von Druckbalken 19 verpreßt werden. Die Werkstoffschichten 13 bis 15 werden dabei gleichzeitig der Hitze der erwärmten Stahlbänder 18 ausgesetzt.

Um zu verhindern, daß die äußeren Werkstoffschichten, also die obere Decklage 13 und die untere Decklage 15, schon vor dem Eintritt in die Doppelbandpresse 10 durch Wärmestrahlung von den Stahlbändern 18 erwärmt werden, sind an der Einlaufseite der Doppelbandpresse 10 zwei Kühltaschen 20 als Wärmeschutzschilde angebracht. Diese Kühltaschen erstrecken sich über die gesamte Breite der einlaufenden Werkstoffschichten 13 bis 15. Sie sind mit Hilfe von Befestigungswinkeln 21 am Maschinengestell der Doppelbandpresse 10 lösbar befestigt und können mit Hilfe von Langlöchern 22, die in den Befestigungswinkeln 21 angeordnet sind, an der Doppelbandpresse 10 verstellt werden.

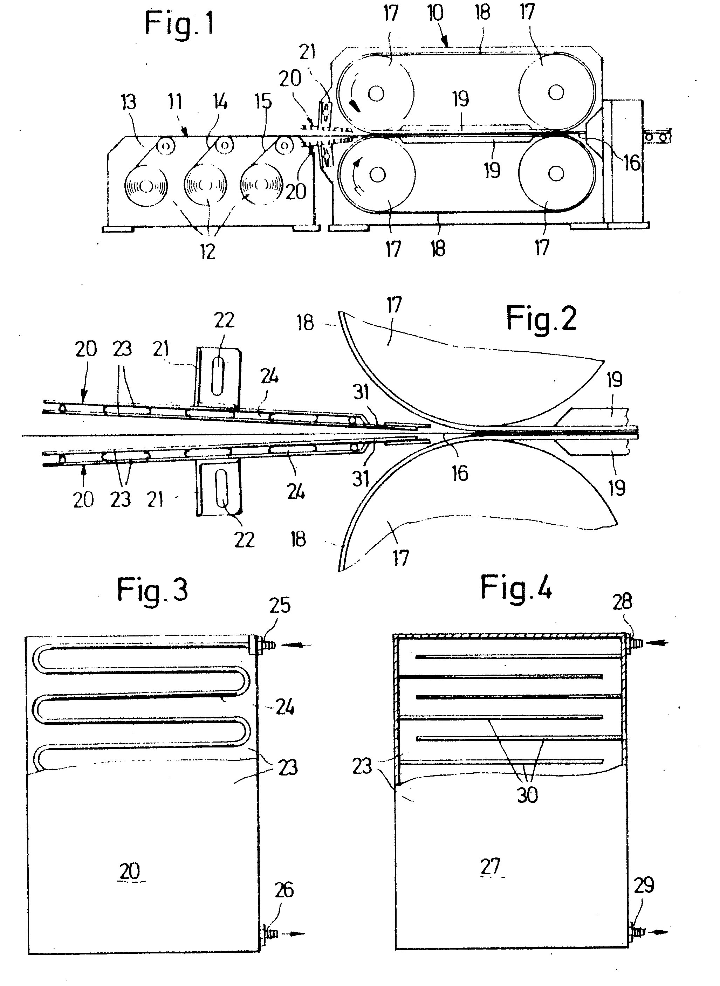

Jede Kühltasche 20 besteht aus zwei parallelen Blechen 23, die in einem Abstand zueinander angeordnet sind. Zwischen den Blechen 23 ist gemäß Fig. 3 der Zeichnung eine Rohrschlange 24 mit einer Eintrittsöffnung 25 und einer Austrittsöffnung 26 für das Kühlmittel, beispielsweise Wasser, angeordnet. Strahlungswärme, die von einem Stahlband 18 an das benachbarte Blech 23 der Kühltasche 20 abgegeben wird, wird so über die Rohrschlange 24 abgeleitet und kann nicht mehr auf das benachbarte Blech 23 der Kühltasche 20 übergehen. Die Decklagen 13 bis 15 der herzustellenden Verbundfolie sind somit an der Eintrittsseite der Doppelbandpresse 10 vor Wärmestrahlung von den Stahlbändern 18 geschützt.

Gemäß Fig. 4 der Zeichnung ist eine Kühltasche 27 ebenfalls aus zwei parallelen Blechen 23 aufgebaut, jeweils als geschlossener Behälter mit einer Eintrittsöffnung 28 und einer Austrittsöffnung 29 ausgeführt. Innerhalb dieser Kühltasche 28 sind mehrere parallele Umlenkbleche 30 als Schikanen angeordnet, welche von dem Kühlmittel, beispielsweise Luft, umströmt werden müssen. Hier erfolgt ebenfalls eine Ableitung der von dem Stahlband 18 an das benachbarte Blech 23 abgegebenen Strahlungswärme durch das Kühlmittel, so daß das den Werkstoffschichten 13 bis 15 zugewandte Blech der Kühltasche 27 nicht erwärmt werden kann.

Mit den erfindungsgemäßen Kühltaschen 20 bzw. 27 ist somit gewährleistet, daß die obere Decklage 13, die Kernlage 14 und die untere Decklage 15 zum selben Zeitpunkt beim Eintritt in die Doppelbandpresse 10 der Wärmeeinwirkung ausgesetzt werden.

Um den Wärmestrahlen der Bänder 18 auf die Decklagen 13, 14 möglichst bis nahe dem Preßbereich der Umlenkrollen 17 entgegenzuwirken, sind die den Deckschichten 13, 14 zugewandten Bleche 23 der Kühltaschen 20 in dem Einlaufbereich verlängert und bilden eine ebenso breite Wärmeableitlippe 31. Diese Lippe 31 leitet die aufgenommene Wärme in die Wandungen 23 der Kühltaschen 20 in den Bereichen ein, in denen das kalte Kühlmittel über die Eintrittsöffnungen 25, 28 eingebracht wird und die wirksamsten Kühlzonen bilden.

Diese wirksamen Kühlzonen lassen sich noch durch die Verstellbarkeit der Kühltaschen 20 in ihrer Schräglage mittels der Langlöcher 22 auf die entsprechende Raumtemperatur einstellen, so daß auch unabhängig von einem Kühlmittel bzw. Kühlmittelfluß durch größere oder kleinere Neigung der Kühltaschen 20 die Kühlung auf die Decklagen 13, 14 verändert werden kann.

**Patentansprüche**

1. Vorrichtung zum Zusammenfügen mehrerer bandförmiger Werkstoffschichten (13, 14, 15) im Durchlauf durch eine Doppelbandpresse (10) mit umlaufenden beheizten Stahlbändern (18), in welcher die Werkstoffschichten unter Wärmeeinwirkung aneinanderpreßbar sind, mit einem an der Einlaufseite der Doppelbandpresse zwischen jedem Stahlband und der benachbarten Werkstoffschicht die Strahlungswärme des Stahlbandes auf der gesamten Breite abdämmenden Schutzschild, dadurch gekennzeichnet, daß jeder Schutzschild als eine von einem Kühlmittel durchströmte Kühltasche (20, 27) ausgebildet ist.

2. Vorrichtung nach Anspruch 1, dadurch gekennzeichnet, daß jede Kühltasche (20, 27) aus zwei parallelen, im Abstand zueinander angeordneten Blechen (23) aufgebaut ist.

3. Vorrichtung nach den Ansprüchen 1 und 2, dadurch gekennzeichnet, daß in dem Raum zwischen den beiden Blechen (23) eine an diesen anliegende, von dem Kühlmittel durchströmte Rohrschlange (24) angeordnet ist.

4. Vorrichtung nach den Ansprüchen 1 und 2, dadurch gekennzeichnet, daß die Kühltasche (27) als Behälter mit einer Eintrittsöffnung (28) und einer Austrittsöffnung (29) für das Kühlmittel ausgebildet ist, wobei in dem Raum zwischen den beiden Blechen (23) mehrere parallele Umlenkbleche (30) angeordnet sind.

5. Vorrichtung nach den Ansprüchen 1 bis 4, dadurch gekennzeichnet, daß die Kühltaschen (20) mittels einer Verstelleinrichtung wie Befestigungswinkel (21) mit Langlöchern (22) in ihrer Neigung veränderbar gelagert sind.

6. Vorrichtung nach den Ansprüchen 2 bis 5, dadurch gekennzeichnet, daß die Bleche (23) auf der der Werkstoffschichten (13, 14, 15) zugewandten Seite im Einlaufbereich verlängert als Wärmeableitlippe (31) ausgebildet sind.

7. Vorrichtung nach den Ansprüchen 1 bis 6, dadurch gekennzeichnet, daß die Eintrittsöffnungen (25, 28) der Kühltaschen (20, 27) für das Kühlmittel im Bereich der Umlenkrollen (17) angeordnet sind.

**Claims**

1. Apparatus for joining together several layers of strip-like material (13, 14, 15) as they pass through a twin-belted press (10) having rotary, heated steel belts (18), in which the layers of material are capable of being pressed together by thermal action, having a protective shield which isolates the radiation heat of the steel belt over the entire width at the inlet end of the twin-belted press between each steel belt and the adjacent layer of material, characterised in that each protective shield is constructed as a cooling pocket (20, 27) through which a coolant flows.

2. Apparatus according to claim 1, characterised in that each cooling pocket (20, 27) is composed of two parallel plates (23) which are spaced apart from each other.

3. Apparatus according to claims 1 and 2, characterised in that, in the space between the two plates (23), there is a spiral tube (24) which abuts against the latter and is traversed by the coolant.

4. Apparatus according to claims 1 and 2, characterised in that the cooling pocket (27) is constructed as a container having an inlet aperture (28) and an outlet aperture (29) for the coolant, wherein several parallel baffle plates (30) are disposed in the space between the two plates (23).

5. Apparatus according to claims 1 to 4, characterised in that the cooling pockets (20) are mounted so as to be variable in terms of their inclination by means of an adjusting device, such as support brackets (21) having elongate slots (22).

6. Apparatus according to claims 2 to 5, characterised in that the plates (23) are constructed as heat conduction lips (31) extending in the inlet region at the side facing the layers of material (13, 14, 15).

7. Apparatus according to claims 1 to 6, characterised in that the inlet apertures (25, 28) in the cooling pockets (20, 27) for the coolant are disposed in the region of the guide rollers (17).

**Revendications**

1. Appareil pour l'assemblage de plusieurs couches de matériau en forme de bande (13, 14, 15) au passage par une presse à deux bandes (10) munie de bandes d'acier chauffées tournantes (18) et dans laquelle les couches de matériau peuvent être pressées l'une contre l'autre sous l'action de la chaleur, comportant un bouclier protecteur arrêtant la chaleur rayonnée de la bande d'acier sur toute la largeur, au côté d'entrée de la presse à deux bandes, entre chaque bande d'acier et la couche de matériau voisine, caractérisé par le fait que chaque bouclier protecteur est constitué sous la forme d'une poche de refroidissement (20, 27) parcourue par un agent de refroidissement.

2. Appareil selon la revendication 1, caractérisé par le fait que chaque poche de refroidissement (20, 27) est constituée par deux plaques (23) disposées avec espacement entre elles.

3. Appareil selon les revendications 1 et 2, caractérisé par le fait que dans l'espacement entre les deux plaques (23) est disposé un serpentin (24) appliqué contre celles-ci et parcouru par l'agent de refroidissement.

4. Appareil selon les revendications 1 et 2, caractérisé par le fait que la poche de refroidisse-caractérisé par le fait que la poche de refroidissement (27) est conçue sous forme de récipient muni d'une ouverture d'entrée (28) et d'une ouverture de sortie (29), destiné à l'agent de refroidissement, plusieurs plaques déflectrices parallèles (30) étant disposées dans l'espacement entre les deux plaques (23).

5. Appareil selon les revendications 1 à 4, caractérisé par le fait que les poches de refroidissement (20) sont montées avec une inclinaison variable au moyen d'un dispositif de réglage tel que des cornières de fixation (21) munies de trous allongés (22).

6. Appareil selon les revendications 2 à 5, caractérisé par le fait que du côté tourné vers les couches de matériau (13, 14, 15), les plaques sont prolongées dans la région d'entrée et conçues sous forme de lèvre de dissipation de chaleur (31).

7. Appareil selon les revendications 1 à 6, caractérisé par le fait que les ouvertures d'entrée (25, 28) des poches de refroidissement (20, 27), destinées à l'agent de refroidissement, sont disposées dans la région des rouleaux de renvoi (17).

Fig. 1

17  10  18  17

21

20

13  11  14  15

19

12

19

19

16

17  18  17

Fig. 2

22

17

18

20  23  21

24

19

31

31

16

19

22  18

19

24

20  23  21

17

Fig. 3

25

24

23

20

26

Fig. 4

28

23

30

27

29